# EUROPEAN PATENT APPLICATION

(11) **EP 4 838 605 A1**
(43) Date of publication of application: **11.11.2026**
(21) Application number: 24925451.7
(22) Date of filing: 15.08.2024
(51) Int. Cl.: H01M 10/054, H01M 4/36

(54) **SODIUM SECONDARY BATTERY AND ELECTRIC APPARATUS**

(30) Priority: 21.02.2024 CN 202410194424
(71) Applicant: Contemporary Amperex Technology Co., Limited, Ningde, Fujian 352100 (CN)
(72) Inventor: YE, Yonghuang, Ningde, Fujian 352100 (CN); XU, Xiaofu, Ningde, Fujian 352100 (CN); JIN, Haizu, Ningde, Fujian 352100 (CN); LI, Xiao, Ningde, Fujian 352100 (CN); PAN, Jianfu, Ningde, Fujian 352100 (CN); SU, Yiwei, Ningde, Fujian 352100 (CN)
(74) Representative: Ran, Handong
(86) International application number: PCT/CN2024/112444
(87) International publication number: WO 2025/175709

(57) **Abstract**

A sodium secondary battery and an electric apparatus. During a discharge process, the ratio of the discharge capacity of the sodium secondary battery within at least one 2 V discharge interval to the total discharge capacity of the sodium secondary battery is greater than or equal to 95%; and the test condition of the discharge process of the sodium secondary battery is: at 25° C, charging to 4.2 V at a constant rate of 0.33C, and then discharging to 1.5 V at a constant rate of 0.33C.

## Description

### CROSS-REFERENCE TO RELATED APPLICATIONS

This application claims priority to Chinese Patent Application No. 202410194424.X, filed on February 21, 2024 and entitled "SODIUM SECONDARY BATTERY AND ELECTRIC APPARATUS," which is incorporated herein by reference in its entirety.

### TECHNICAL FIELD

This application relates to the technical field of secondary batteries, and in particular, to a sodium secondary battery and an electric apparatus.

### BACKGROUND

In recent years, secondary batteries have been widely used in energy storage systems such as hydroelectric, thermal, wind, and solar power stations, as well as in various fields including electric tools, electric bicycles, electric motorcycles, electric vehicles, military equipment, and aerospace. With the widespread application of secondary batteries, there is an increasing requirement for balancing their cost and performance.

Sodium secondary batteries can achieve charging and discharging through the intercalation and deintercalation of sodium ions between the positive and negative electrodes. Compared to lithium secondary batteries, sodium secondary batteries have more abundant element sodium, which is widely distributed and less costly, making them a potential alternative to lithium secondary batteries. However, sodium secondary batteries in the prior art often face compatibility issues when used with existing motors, which hinders promotion and application of the sodium secondary batteries in the market.

### SUMMARY

This application is made in view of the above issues, with an objective of providing a sodium secondary battery that can effectively adapt to existing motors, thereby facilitating the promotion and application of sodium secondary batteries.

A first aspect of this application provides a sodium secondary battery, where a ratio of a discharge capacity of the sodium secondary battery in at least one 2V discharge range during a discharge process to a total discharge capacity of the sodium secondary battery is greater than or equal to 95%, and test conditions for the discharge process of the sodium secondary battery are: charging at a constant rate of 0.33C to 4.2V at 25°C, followed by discharging at a constant rate of 0.33C to 1.5V.

The above sodium secondary battery has a high discharge specific capacity within the voltage range usable by motors, enabling full utilization of the capacity level of the sodium secondary battery and reducing resource waste.

In any embodiment, a ratio of a discharge capacity of the sodium secondary battery in a voltage range from 2V to 1.5V during a discharge process to a total discharge capacity of the sodium secondary battery is less than or equal to 5%, and test conditions for the discharge process of the sodium secondary battery are: charging at a constant rate of 0.33C to 4.2V at 25°C, followed by discharging at a constant rate of 0.33C to 1.5V.

The lower limit voltage of lithium secondary batteries is typically 2.5V, and motors in the prior art are often difficult to start when the battery cell voltage is below 2V. To adapt to motors, the minimum usable voltage of sodium secondary batteries is typically set to 2V. As the ratio of the discharge capacity in the voltage range from 2V to 1.5V during the discharge process to the total discharge capacity of the sodium secondary battery is less than or equal to 5%, the sodium secondary battery has a high usable capacity, which facilitates full utilization of the capacity level of the sodium secondary battery and improves the power supply efficiency of the secondary battery.

In any embodiment, the sodium secondary battery includes a positive electrode plate, where a ratio of a discharge capacity of the positive electrode plate in at least one 2.2V discharge range during a discharge process to a total discharge capacity of the positive electrode plate is greater than or equal to 90%; and a discharge process test for the positive electrode plate is a button cell test with conditions of: charging at a constant rate of 0.1C to 4.2V at 25°C, followed by discharging at a constant rate of 0.1C to 1.5V.

This positive electrode plate has a high discharge capacity ratio within a relatively narrow voltage range, enabling the sodium secondary battery to have a high discharge capacity within the voltage range usable by motors, fully utilizing the capacity level of the positive electrode plate, and reducing resource waste.

In any embodiment, the positive electrode plate includes a positive electrode current collector and a positive electrode film layer disposed on at least one side of the positive electrode current collector, the positive electrode film layer including a positive electrode active material, where the positive electrode active material includes polyanionic compounds, sodium-containing transition metal oxides, and respective modified compounds thereof.

In any embodiment, a composition of the polyanionic compound is as shown in Formula I:

NaₙMₚ(XₐO_{b})_{c}Z_{w} Formula I,

where M includes one or more of Ti, V, Cr, Mn, Fe, Co, Ni, Ca, Mg, Al, Nb, or Zr, X includes one or more of Si, S, P, As, B, Mo, W, or Ge, and Z includes one or more of F, O, Cl, or OH, where 2≤n≤7, 1≤p≤4, 1≤a≤2, 1≤b≤7, 1≤c≤5, and 0≤w≤3.

In any embodiment, the positive electrode active material includes one or more of sodium iron pyrophosphate, sodium vanadium phosphate, fluorinated sodium vanadium phosphate, sodium iron sulfate, and respective modified materials thereof.

The positive electrode active material with the above composition enables the secondary battery to have a relatively low upper limit voltage and a high capacity ratio within a relatively narrow voltage range, which is beneficial for the sodium secondary battery to release a high discharge capacity within the voltage range usable by motors, improving the discharge efficiency of the battery.

In any embodiment, a capacity per unit area M of the positive electrode plate is less than or equal to 20mAh/cm².

A positive electrode plate with a capacity per unit area within the above range helps reduce element sodium deposition on the negative electrode, especially in anode-free sodium batteries, effectively controlling the thickness of the sodium metal layer deposited on the negative electrode, and enabling the sodium secondary battery to always maintain high cycling stability during long-term cycling.

In any embodiment, the sodium secondary battery includes a negative electrode plate, where when the sodium secondary battery is in a fully charged state, an average potential of the negative electrode plate is less than or equal to 0.2V, the fully charged state of the sodium secondary battery referring to the sodium secondary battery being charged at a constant rate of 0.33C to 4.2V at 25°C, and/or a difference between an upper limit potential and a lower limit potential of the negative electrode plate is less than or equal to 0.5V.

A negative electrode plate with an average potential within the above range enables the sodium secondary battery to have a relatively high lower limit voltage to meet the requirements of existing motors for the lower limit voltage of battery cells.

A negative electrode plate with the difference between the upper limit potential and the lower limit potential within the above range enables the sodium secondary battery to have a relatively narrow charge-discharge voltage range, meeting the requirements of existing motors for the voltage window of secondary battery cells.

In any embodiment, in a fully charged state of the sodium secondary battery, a thickness h of a film layer on the negative electrode current collector in the negative electrode plate is less than or equal to 250µm, optionally 10µm-200µm; and the fully charged state of the sodium secondary battery refers to the sodium secondary battery being charged at a constant rate of 0.33C to 4.2V at 25°C.

In the fully charged state of the sodium secondary battery, the thickness h of the film layer on the negative electrode current collector in the negative electrode plate being within the above range indicates that the sodium secondary battery has relatively high cycling stability, preventing significant deposition of sodium from the positive electrode on the negative electrode during cycling.

In any embodiment, the sodium secondary battery includes an electrolyte, the electrolyte including short-chain ethers and long-chain ethers; and the short-chain ether includes ethylene glycol dimethyl ether, and the long-chain ether includes at least one component as shown in Formula II:

R1-(O-R3)n-O-R2 Formula II,

where R1 and R2 are each independently selected from linear or branched alkyl groups with 1 to 6 carbon atoms, R3 is selected from linear or branched alkylene groups with 1 to 5 carbon atoms, and n is an integer from 2 to 5; or R1 and R2 are each independently selected from linear or branched alkyl groups with 2 to 6 carbon atoms, R3 is selected from linear or branched alkylene groups with 1 to 5 carbon atoms, and n is 1.

Ether solvents have good reduction stability, are not easily reduced by sodium metal at the negative electrode, and thus are not continuously decomposed, enabling the battery to have good cycling stability; meanwhile, ether solvents have a stable solvation structure, facilitating the formation of a thin and stable solid electrolyte interface (SEI) film, which improves battery cycling stability. Furthermore, ether solvents have a low freezing point and viscosity, making the secondary battery suitable for low-temperature environments. Ethylene glycol dimethyl ether has good solvation ability, providing a foundation for dissolving a certain amount of sodium electrolytic salts; while long-chain ethers can enhance the oxidation resistance of the electrolyte, improving the interface stability between the electrode and the interface in sodium secondary batteries, especially in sodium metal batteries and anode-free batteries.

In any embodiment, the long-chain ether includes one or a combination of two or more of the following: diethylene glycol dimethyl ether, triethylene glycol dimethyl ether, tetraethylene glycol dimethyl ether, pentaethylene glycol dimethyl ether, ethylene glycol diethyl ether, diethylene glycol diethyl ether, triethylene glycol diethyl ether, tetraethylene glycol diethyl ether, pentaethylene glycol diethyl ether, ethylene glycol dibutyl ether, and polymers thereof.

In any embodiment, based on a total mass of the electrolyte, a mass percentage of the short-chain ether is 4% to 50%.

In any embodiment, the sodium secondary battery includes an anode-free battery or a sodium metal battery.

An anode-free sodium secondary battery refers to a battery constructed without actively providing a negative electrode active material layer on the negative electrode side during the battery manufacturing process, for example, without forming a negative electrode active material layer by disposing sodium metal or carbonaceous active materials on the negative electrode through processes such as coating and depositing. During the first charge, sodium ions receive electrons on the anode side to deposit as sodium metal on the surface of the current collector, forming a sodium metal phase. During discharge, the sodium metal can transform into sodium ions and return to the positive electrode, achieving cyclic charging and discharging. Compared to other sodium secondary batteries, anode-free sodium secondary batteries can achieve higher energy density due to the absence of a negative electrode active material layer.

A sodium metal battery refers to a secondary battery prepared by pre-depositing sodium metal or its alloy on the negative electrode during the battery manufacturing process. By using sodium metal as the negative electrode active material, the negative electrode plate has a low potential, which is beneficial for increasing the usable capacity of the sodium secondary battery within the usable voltage range.

A second aspect of this application provides an electric apparatus including the sodium secondary battery of the first aspect.

### BRIEF DESCRIPTION OF DRAWINGS

FIG. 1 is a schematic diagram of a discharge curve of a sodium secondary battery according to an embodiment of this application;
FIG. 2 is a schematic diagram of a secondary battery according to an embodiment of this application;
FIG. 3 is an exploded view of the secondary battery shown in FIG. 2 according to an embodiment of this application;
FIG. 4 is a schematic diagram of a battery module according to an embodiment of this application;
FIG. 5 is a schematic diagram of a battery pack according to an embodiment of this application;
FIG. 6 is an exploded view of the battery pack shown in FIG. 5 according to an embodiment of this application; and
FIG. 7 is a schematic diagram of an electric apparatus using a secondary battery as a power source according to an embodiment of this application.

### Description of reference numerals in the drawings:

1. battery pack; 2. upper box body; 3. lower box body; 4. battery module; 5. secondary battery; 51. housing; 52. electrode assembly; and 53. cover plate.

### DESCRIPTION OF EMBODIMENTS

Hereinafter, embodiments that specifically disclose the sodium secondary battery and electric apparatus of this application will be described in detail with appropriate reference to the drawings. However, unnecessary detailed descriptions may be omitted. For example, detailed descriptions of well-known matters or repeated descriptions of substantially identical structures may be omitted. This is to avoid unnecessarily lengthy descriptions and to facilitate understanding by those skilled in the art. Additionally, the drawings and the following description are provided to enable those skilled in the art to fully understand this application and are not intended to limit the subject matter recited in the claims.

The "range" disclosed in this application is defined in the form of a lower limit and an upper limit, and a given range is defined by selecting a lower limit and an upper limit, and the selected lower limit and upper limit define the boundaries of a particular range. Ranges defined in this manner may include or exclude the endpoints and can be arbitrarily combined, that is, any lower limit can be combined with any upper limit to form a range. For example, if ranges of 60-120 and 80-110 are listed for a specific parameter, it is understood that ranges of 60-110 and 80-120 are also contemplated. Additionally, if minimum range values of 1 and 2 are listed, and maximum range values of 3, 4, and 5 are listed, the following ranges are all contemplated: 1-3, 1-4, 1-5, 2-3, 2-4, and 2-5. In this application, unless otherwise specified, the numerical range "a-b" represents an abbreviated representation of any real number combination between a and b, where both a and b are real numbers. For example, the numerical range "0-5" means that all real numbers between "0-5" have been listed herein, and "0-5" is merely an abbreviated representation of these numerical combinations. Additionally, when a parameter is expressed as an integer greater than or equal to 2, it is equivalent to disclosing that the parameter is, for example, the integer 2, 3, 4, 5, 6, 7, 8, 9, 10, 11, or 12.

Unless otherwise specified, all embodiments and optional embodiments of this application can be combined with each other to form new technical solutions.

Unless otherwise specified, all technical features and optional technical features of this application can be combined with each other to form new technical solutions.

Unless otherwise specified, all steps of this application can be performed sequentially or randomly, preferably sequentially. For example, the method includes steps (a) and (b), indicating that the method may include steps (a) and (b) performed sequentially, or steps (b) and (a) performed sequentially. For example, if the method further includes step (c), it means that step (c) can be added to the method in any order, for example, the method may include steps (a), (b), and (c), steps (a), (c), and (b), steps (c), (a), and (b), or the like.

Unless otherwise specified, the terms "include" and "comprise" mentioned in this application indicate an open-ended or closed-ended inclusion. For example, "include" and "comprise" may indicate that other components not listed may also be included or comprised, or only the listed components may be included or comprised.

Unless otherwise specified, in this application, the term "or" is inclusive. For example, the phrase "A or B" means "A, B, or both A and B." More specifically, any of the following conditions satisfy the condition "A or B": A is true (or present) and B is false (or absent); A is false (or absent) and B is true (or present); or both A and B are true (or present).

A common design in the prior art is to combine more than 100 cells in series and parallel arrangements to meet the driving voltage requirements of motors. The voltage difference between the driving voltage and the minimum starting voltage of a motor is always 200V. To simultaneously meet the requirements of motor driving voltage and minimum starting voltage, the charge-discharge voltage range of cells is generally required to be within 2V. The voltage difference between the fully charged state and the fully discharged state of each cell in a lithium secondary battery is between 1.1V and 1.8V, which can simultaneously meet the requirements of motor driving voltage and minimum starting voltage. However, the voltage difference between the fully charged state and the fully discharged state of sodium secondary batteries in the prior art is generally greater than 2V, making it impossible for sodium secondary batteries to fully utilize the capacity within the 2V range required by motors. For example, in the layered oxide-hard carbon sodium secondary battery system, a maximum of only 88% of the capacity can be utilized within the 2V voltage range, resulting in resource waste.

### [Sodium secondary battery]

Based on this, this application proposes a sodium secondary battery, where a ratio of a discharge capacity of the sodium secondary battery in at least one 2V discharge range during a discharge process to a total discharge capacity of the sodium secondary battery is greater than or equal to 95%, and test conditions for the discharge process of the sodium secondary battery are: charging at a constant rate of 0.33C to 4.2V at 25°C, followed by discharging at a constant rate of 0.33C to 1.5V.

The fully charged state refers to a battery (including full cells and button cells) being charged to 4.2V, corresponding to 100% SOC.

The fully discharged state refers to a battery (including full cells and button cells) being discharged to 1.5V, corresponding to 0% SOC.

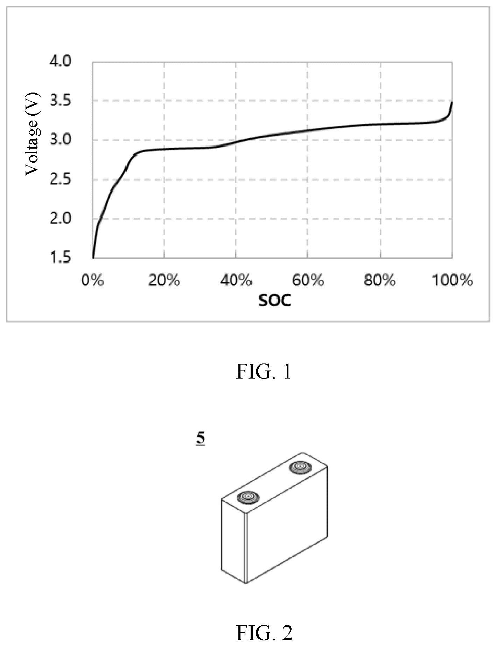

In this application, the ratio of the discharge capacity of the sodium secondary battery in at least one 2V discharge range during the discharge process to the total discharge capacity of the sodium secondary battery can be tested using methods known in the art, for example, by testing the discharge curve of the sodium secondary battery. For instance, the discharge curve of the sodium secondary battery is measured using a VMP3 electrochemical workstation. The sodium secondary battery is charged at a constant rate of 0.33C to 4.2V at 25°C, and then discharged at a constant rate of 0.33C to 1.5V. The state of charge (SOC) of the sodium secondary battery at different voltages during the discharge process is measured. The capacity of the sodium secondary battery at different voltages divided by the total capacity released from the fully charged state to the fully discharged state is taken as the state of charge of the sodium secondary battery. FIG. 1 shows a discharge curve of a sodium secondary battery according to an embodiment of this application. When the voltage is aV, the corresponding state of charge of the sodium secondary battery is S1; when the voltage is the higher of (a-2)V or 1.5V, the corresponding state of charge of the sodium secondary battery is S2; the value of S1-S2 is taken as the ratio of the discharge capacity of the sodium secondary battery in the 2V discharge range to the total discharge capacity of the sodium secondary battery.

In some embodiments, the ratio of the discharge capacity of the sodium secondary battery in at least one 2V discharge range during the discharge process to the total discharge capacity of the sodium secondary battery is 95%, 96%, 97%, 98%, 99%, 100%, or any value therebetween.

The above sodium secondary battery has a high discharge specific capacity within the voltage range usable by motors, enabling full utilization of the capacity level of the sodium secondary battery and reducing resource waste.

In some embodiments, a ratio of a discharge capacity of the sodium secondary battery in a voltage range from 2V to 1.5V during a discharge process to a total discharge capacity of the sodium secondary battery is less than or equal to 5%, and test conditions for the discharge process of the sodium secondary battery are: charging at a constant rate of 0.33C to 4.2V at 25°C, followed by discharging at a constant rate of 0.33C to 1.5V.

The ratio of the discharge capacity of the sodium secondary battery in the voltage range from 2V to 1.5V during the discharge process to the total discharge capacity of the sodium secondary battery can be tested with reference to the discharge curve described above. The state of charge of the sodium secondary battery corresponding to 2V minus the state of charge of the sodium secondary battery corresponding to 1.5V in the discharge curve is taken as the ratio of the discharge capacity of the sodium secondary battery in the voltage range from 2V to 1.5V during the discharge process to the total discharge capacity of the sodium secondary battery.

In some embodiments, the ratio of the discharge capacity of the sodium secondary battery in the voltage range from 2V to 1.5V during the discharge process to the total discharge capacity of the sodium secondary battery is 0%, 1%, 2%, 3%, 4%, 5%, or any value therebetween.

The lower limit voltage of lithium secondary batteries is typically 2.5V, and motors in the prior art are often difficult to start when the battery cell voltage is below 2V. To adapt to motors, the minimum usable voltage of sodium secondary batteries is typically set to 2V. As the ratio of the discharge capacity in the voltage range from 2V to 1.5V during the discharge process to the total discharge capacity of the sodium secondary battery is less than or equal to 5%, the sodium secondary battery has a high usable capacity, facilitating full utilization of the capacity level of the sodium secondary battery and reducing resource waste.

In some embodiments, the sodium secondary battery includes a positive electrode plate, where a ratio of a discharge capacity of the positive electrode plate in at least one 2.2V discharge range during a discharge process to a total discharge capacity of the positive electrode plate is greater than or equal to 90%; and a discharge process test for the positive electrode plate is a button cell test with conditions of: charging at a constant rate of 0.1C to 4.2V at 25°C, followed by discharging at a constant rate of 0.1C to 1.5V.

In this application, the ratio of the discharge capacity of the positive electrode plate in at least one 2.2V discharge range during the discharge process to the total discharge capacity of the positive electrode plate can be tested using methods known in the art, for example, by assembling the positive electrode plate of the sodium secondary battery with sodium metal into a button cell and testing the discharge curve of the button cell. The positive electrode plate of the sodium secondary battery is pressed into a circular electrode plate, then a small circular sodium piece is used as the counter electrode, a polypropylene separator is used, and an electrolyte is injected, the electrolyte including 1mol/L sodium hexafluorophosphate, with the solvent in the electrolyte being ethylene glycol dimethyl ether (DME) and diethylene glycol diethyl ether (DEE), to assemble a button cell. At 25°C under normal pressure, the button cell is charged at a constant rate of 0.1C to a voltage of 4.2V, and then discharged at a constant rate of 0.1C to 1.5V to obtain the discharge curve of the button cell. The capacity of the button cell at different voltages divided by the total discharge capacity from the fully charged state to the fully discharged state is taken as the state of charge of the button cell, the state of charge of the button cell in different voltages during the discharge process is measured, and the state of charge difference in the 2.2V discharge range is calculated as the ratio of the discharge capacity of the positive electrode plate in the 2.2V discharge range to the total discharge capacity of the positive electrode plate.

In some embodiments, the ratio of the discharge capacity of the positive electrode plate in at least one 2.2V range during the discharge process to the total discharge capacity of the positive electrode plate is 90%, 91%, 92%, 93%, 94%, 95%, 96%, 97%, 98%, 99%, 100%, or any value therebetween.

This positive electrode plate has a high discharge capacity ratio within a relatively narrow voltage range, enabling the sodium secondary battery to have a high discharge capacity within the voltage range usable by motors, fully utilizing the capacity level of the positive electrode plate, and reducing resource waste.

In some embodiments, the positive electrode plate includes a positive electrode current collector and a positive electrode film layer disposed on at least one side of the positive electrode current collector, the positive electrode film layer including a positive electrode active material.

In some embodiments, the positive electrode active material may use positive electrode active materials known in the art for batteries. As an example, the positive electrode active material may include at least one of the following materials: Prussian blue analogs, polyanionic compounds, sodium-containing transition metal oxides, and respective modified compounds thereof. However, this application is not limited to these materials, and other conventional materials that can be used as positive electrode active materials for batteries may also be used. These positive electrode active materials may be used alone or in combination of two or more. The Prussian blue analogs are NaₓP[R(CN)₆]_{δ}·zH₂O, where P and R are each independently selected from at least one of the transition metal elements, 0<x≤2, 0<δ≤1, and 0≤z≤10.

In some embodiments, the positive electrode active material includes polyanionic compounds, sodium-containing transition metal oxides, and respective modified compounds thereof.

In some embodiments, in the sodium-containing transition metal oxides, the transition metal may be at least one of Mn, Fe, Ni, Co, Cr, Cu, Ti, Zn, V, Zr, and Ce. The sodium-containing transition metal oxide is, for example, NaₓMO₂, where M includes one or more of Ti, V, Mn, Co, Ni, Fe, Cr, and Cu, and 0<x≤1.

In some embodiments, a composition of the polyanionic compound is as shown in Formula I:

NaₙMₚ(XₐO_{b})_{c}Z_{w} Formula I,

where M includes one or more of Ti, V, Cr, Mn, Fe, Co, Ni, Ca, Mg, Al, Nb, or Zr, X includes one or more of Si, S, P, As, B, Mo, W, or Ge, and Z includes one or more of F, O, Cl, or OH, where 2≤n≤7, 1≤p≤4, 1≤a≤2, 1≤b≤7, 1≤c≤5, and 0≤w≤3.

In some embodiments, the positive electrode active material includes one or more of sodium iron pyrophosphate, sodium vanadium phosphate, fluorinated sodium vanadium phosphate, sodium iron sulfate, and respective modified materials thereof.

In some embodiments, the modified materials include doped modified materials and/or coated modified materials.

The positive electrode active material with the above composition enables the secondary battery to have a relatively low upper limit voltage and a high capacity ratio within a relatively narrow voltage range, which is beneficial for the sodium secondary battery to release a high discharge capacity within the voltage range usable by motors, reducing resource waste.

In some embodiments, a capacity per unit area of the positive electrode plate is less than or equal to 20mAh/cm².

In this application, the capacity per unit area of the positive electrode plate can be tested using methods known in the art, for example, by punching the positive electrode plate of the sodium secondary battery into small circular pieces, assembling them with sodium metal into a button cell, and conducting a discharge curve test on the button cell at a discharge rate of 0.1C. The specific preparation methods and testing methods for the button cell can refer to the description above. The discharge current of the button cell from the fully charged state to the fully discharged state multiplied by the discharge time divided by the area of the positive electrode plate is taken as the capacity per unit area of the positive electrode plate. In some embodiments, the capacity per unit area of the positive electrode plate is 2mAh/cm², 4mAh/cm², 6mAh/cm², 8mAh/cm², 10mAh/cm², 12mAh/cm², 14mAh/cm², 16mAh/cm², 18mAh/cm², 20mAh/cm², or any value therebetween.

A positive electrode plate with a capacity per unit area within the above range helps reduce sodium deposition on the negative electrode, especially in anode-free sodium batteries, effectively controlling the thickness of the sodium metal layer deposited on the negative electrode, and enabling the sodium secondary battery to always maintain high cycling stability during long-term cycling.

In some embodiments, the sodium secondary battery includes a negative electrode plate, and in a fully charged state of the sodium secondary battery, an average potential of the negative electrode plate is less than or equal to 0.2V, the fully charged state of the sodium secondary battery referring to the sodium secondary battery being charged at a constant rate of 0.33C to 4.2V at 25°C, and/or a difference between an upper limit potential and a lower limit potential of the negative electrode plate is less than or equal to 0.5V.

In this document, the average potential, upper limit potential, and lower limit potential of the negative electrode plate can be obtained by assembling the negative electrode plate of the sodium secondary battery in the fully charged state with sodium metal into a button cell and conducting a discharge curve test on the button cell. The preparation methods and testing methods for the button cell can refer to the description above, with the test range from 2V to 0V. The voltage corresponding to 50% SOC, the voltage corresponding to 99% SOC, and the voltage corresponding to 1% SOC in the discharge curve of the button cell are taken as the average potential, upper limit potential, and lower limit potential of the negative electrode plate, respectively.

A negative electrode plate with an average potential within the above range enables the sodium secondary battery to have a relatively high lower limit voltage to meet the requirements of existing motors for the lower limit voltage of battery cells.

A negative electrode plate with the difference between the upper limit potential and the lower limit potential within the above range enables the sodium secondary battery to have a relatively narrow charge-discharge voltage range, meeting the requirements of existing motors for the voltage window of secondary battery cells.

In some embodiments, the battery capacity loss value CB of the sodium secondary battery during the discharge process satisfies: CB≤1.5. CB is tested by the following formula: CB=(C1+J×t)/C2, where C1 is the residual capacity per unit area of the positive electrode plate in the fully discharged state of the sodium secondary battery, in mAh/cm²; J is the charging current density, which can be 0.5mA/cm²; t is the time required for the potential of the negative electrode plate in the fully discharged state of the sodium secondary battery to rise to 1V under the current density J, in hours; and C2 is the maximum capacity per unit area of the positive electrode plate, in mAh/cm².

Specifically, the above parameters can be tested through the following experiment. The positive electrode plate of the sodium secondary battery in the fully discharged state is assembled with a sodium metal disc into a button cell, with the preparation method of the button cell as described above. A discharge test is performed on the button cell, and the discharge capacity of the button cell divided by the area of the positive electrode plate in the button cell is taken as C1, where C1 may represent the residual discharge capacity per unit area of the positive electrode plate in the fully discharged state of the secondary battery; a charge test is performed on the fully discharged button cell, and the charge capacity of the button cell divided by the area of the positive electrode plate in the button cell is taken as C2, where C2 represents the maximum capacity achievable by the positive electrode plate. The negative electrode plate of the sodium secondary battery in the fully discharged state is assembled with a sodium metal disc into a button cell, with the preparation method of the button cell as described above. The button cell is charged at a current density of 0.5mA/cm², and the time corresponding to the voltage rising to 1V is recorded as t hours, where 0.5×t represents the actual discharge capacity of the negative electrode plate.

In some embodiments, the battery capacity loss value CB of the sodium secondary battery during the discharge process is 0.1, 0.3, 0.5, 0.7, 0.9, 1.1, 1.3, 1.5, or any value therebetween.

A sodium secondary battery negative electrode with CB within the above range generally has a relatively low capacity, such as an anode-free battery. Compared to other sodium secondary batteries, a sodium secondary battery with CB within the above range has a simpler process and higher energy density.

In some embodiments, in the fully charged state of the sodium secondary battery, the thickness h of the film layer on the negative electrode current collector in the negative electrode plate is less than or equal to 250µm. In some embodiments, h is 10µm-200µm; and the fully charged state of the sodium secondary battery refers to a sodium secondary battery being charged at a constant rate of 0.33C to 4.2V at 25°C.

In this document, in the fully charged state of the sodium secondary battery, the thickness h of the film layer on the negative electrode current collector in the alkali metal layer of the negative electrode plate can be tested using methods known in the art. For example, at 25°C, the sodium secondary battery is charged at a rate of 0.33C to the upper limit voltage, the cell is disassembled to obtain the negative electrode plate, and the thickness of the negative electrode plate is measured using a micrometer (for example, Mitutoyo 293-100, with an accuracy of 0.1µm), in µm. To prevent adhesion of the metal on the test surface, two layers of 0.1µm thick acrylic sheets are evenly placed on the negative electrode plate in the fully charged state before testing, fixed with dovetail clips around the edges, and the total thickness obtained from the test minus the thickness of the negative electrode current collector and its surface functional coating, and further minus the thickness of the surface acrylic sheets, is taken as the thickness h of the film layer on the negative electrode current collector in the negative electrode plate. In some embodiments, in the fully charged state of the sodium secondary battery, the thickness h of the film layer on the negative electrode current collector in the negative electrode plate is 5µm, 10µm, 30µm, 50µm, 70µm, 90µm, 110µm, 130µm, 150µm, 170µm, 200µm, 220µm, 250µm, or any value therebetween.

In the fully charged state of the sodium secondary battery, the thickness h of the film layer on the negative electrode current collector in the negative electrode plate being within the above range indicates that the sodium secondary battery has relatively high cycling stability, preventing significant deposition of sodium from the positive electrode on the negative electrode during cycling.

In some embodiments, the sodium secondary battery includes an electrolyte, the electrolyte including short-chain ethers and long-chain ethers; and the short-chain ether includes ethylene glycol dimethyl ether, and the long-chain ether includes at least one component as shown in Formula II:

R1-(O-R3)n-O-R2 Formula II,

where R1 and R2 are each independently selected from linear or branched alkyl groups with 1 to 6 carbon atoms, R3 is selected from linear or branched alkylene groups with 1 to 5 carbon atoms, and n is an integer from 2 to 5; or R1 and R2 are each independently selected from linear or branched alkyl groups with 2 to 6 carbon atoms, R3 is selected from linear or branched alkylene groups with 1 to 5 carbon atoms, and n is 1.

The term "alkyl group" refers to a monovalent group with the general formula CₙH₂ₙ₊₁, derived from removing one hydrogen atom from a saturated, unbranched, or branched aliphatic hydrocarbon. Examples of alkyl group include, but are not limited to, (C1-C6) alkyl groups, such as methyl, ethyl, propyl, isopropyl, butyl, isobutyl, tert-butyl, pentyl, isopentyl, neopentyl, and hexyl.

The term "alkylene group" refers to an unbranched or branched divalent hydrocarbon group with 1 to 5 carbon atoms. Examples include methylene, 1,2-ethylene, 1,2-propylene, 1,3-propylene, 1,3-butylene, 1,4-butylene, 2-methyl-1,3-propylene, 1,1-dimethyl-1,2-ethylene, 1,4-pentylene, and 1,5-pentylene.

In some embodiments, R1 and R2 each independently include one or more of methyl, ethyl, propyl, butyl, pentyl, R3 includes 1,2-ethylene, and n is any one of 2, 3, 4, 5.

In some embodiments, R1 and R2 each independently include one or more of ethyl, propyl, butyl, pentyl, R3 includes 1,2-ethylene, and n is 1.

Ether solvents have good reduction stability, are not easily reduced by sodium metal at the negative electrode, and thus are not continuously decomposed, enabling the battery to have good cycling stability; meanwhile, ether solvents have a stable solvation structure, facilitating the formation of a thin and stable solid electrolyte interface (SEI) film, which improves battery cycling stability. Furthermore, ether solvents have a low freezing point and viscosity, making the secondary battery suitable for low-temperature environments. Ethylene glycol dimethyl ether has good solvation ability, providing a foundation for dissolving a certain amount of sodium electrolytic salts; while long-chain ethers can enhance the oxidation resistance of the electrolyte, improving the interface stability between the electrode and the interface in sodium secondary batteries, especially in sodium metal batteries and anode-free batteries.

In some embodiments, the long-chain ether includes one or a combination of two or more of the following: diethylene glycol dimethyl ether, triethylene glycol dimethyl ether, tetraethylene glycol dimethyl ether, pentaethylene glycol dimethyl ether, ethylene glycol diethyl ether, diethylene glycol diethyl ether, triethylene glycol diethyl ether, tetraethylene glycol diethyl ether, pentaethylene glycol diethyl ether, ethylene glycol dibutyl ether, and polymers thereof.

The polymer may refer to a homopolymer or a copolymer, obtained by polymerizing monomers including the above ethers and their derivatives.

In some embodiments, based on a total mass of the electrolyte, a mass percentage of the short-chain ether is 4% to 50%.

In some embodiments, based on the total mass of the electrolyte, the mass percentage of the short-chain ether is 4%, 8%, 12%, 16%, 20%, 24%, 28%, 32%, 36%, 40%, 45%, 50%, or any value therebetween.

In some embodiments, the electrolyte includes an electrolytic salt, the electrolytic salt being selected from at least one of NaPF₆, NaBF₄, NaN(SO₂F)₂ (NaFSI), NaClO₄, NaAsF₆, NaB(C₂O₄)₂ (NaBOB), NaBF₂(C₂O₄) (NaDFOB), NaN(SO₂RF)₂, NaN(SO₂F)(SO₂RF), where RF is C_{b}F_{2b+1}, and b is an integer from 1 to 10, for example, an integer from 1 to 3.

In some embodiments, the electrolytic salt is selected from one or more of NaPF₆, NaN(SO₂F)₂, NaN(CF₃SO₂)₂, NaB(C₂O₄)₂, NaBF₂(C₂O₄). In some embodiments, the electrolytic salt is selected from one or more of NaPF₆, NaN(SO₂RF)₂, NaBF₂(C₂O₄). In some embodiments, RF is -CF₃, -C₂F₅, or -CF₂CF₂CF₃.

In some embodiments, the sodium secondary battery includes an anode-free battery or a sodium metal battery.

A sodium metal battery refers to a secondary battery prepared by pre-depositing sodium metal or its alloy on the negative electrode during the battery manufacturing process. By using sodium metal as the negative electrode active material, the negative electrode plate has a low potential, which is beneficial for increasing the usable capacity of the sodium secondary battery within the usable voltage range.

An anode-free sodium secondary battery refers to a battery constructed without actively providing a negative electrode active material layer on the negative electrode side during the battery manufacturing process, for example, without forming a negative electrode active material layer by disposing sodium metal or carbonaceous active materials on the negative electrode through processes such as coating and depositing. During the first charge, sodium ions receive electrons on the anode side to deposit as sodium metal on the surface of the current collector, forming a sodium metal phase. During discharge, the sodium metal can transform into sodium ions and return to the positive electrode, achieving cyclic charging and discharging. Compared to other sodium secondary batteries, anode-free sodium secondary batteries can achieve higher energy density due to the absence of a negative electrode active material layer.

In some embodiments, the negative electrode plate includes a negative electrode current collector.

In some embodiments, the negative electrode current collector may use a metal foil or a composite current collector. For example, as a metal foil, copper foil or aluminum foil may be used. The composite current collector may include a polymer material substrate and a metal layer formed on at least one surface of the polymer material substrate. The composite current collector may be formed by forming a metal material (copper, copper alloy, aluminum, aluminum alloy, nickel, nickel alloy, titanium, titanium alloy, silver, silver alloy, or the like) on a polymer material substrate (such as polypropylene (PP), polyethylene terephthalate (PET), polybutylene terephthalate (PBT), polystyrene (PS), or polyethylene (PE)).

In some embodiments, to improve battery performance, the negative electrode side of an anode-free sodium secondary battery may include some conventional materials that can be used as negative electrode active materials, such as carbonaceous materials, metal oxides, or alloys. Although these materials have a certain capacity, due to their small amount, they are not used as the primary negative electrode active material in the battery, and thus do not form a negative electrode active material layer for sodium intercalation. Such sodium secondary batteries can still be considered anode-free sodium secondary batteries.

### [Positive electrode plate]

The positive electrode plate typically includes a positive electrode current collector and a positive electrode film layer disposed on at least one surface of the positive electrode current collector, the positive electrode film layer including a positive electrode active material.

As an example, the positive electrode current collector has two opposite surfaces in its thickness direction, and the positive electrode film layer is disposed on either or both of the two opposite surfaces of the positive electrode current collector.

In some embodiments, the positive electrode current collector may use a metal foil or a composite current collector. For example, as a metal foil, aluminum foil may be used. The composite current collector may include a polymer material substrate and a metal layer formed on at least one surface of the polymer material substrate. The composite current collector may be formed by forming a metal material (aluminum, aluminum alloy, nickel, nickel alloy, titanium, titanium alloy, silver, silver alloy, or the like) on a polymer material substrate (such as polypropylene (PP), polyethylene terephthalate (PET), polybutylene terephthalate (PBT), polystyrene (PS), or polyethylene (PE)).

In some embodiments, the positive electrode film layer may optionally include a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resin.

In some embodiments, the positive electrode film layer may optionally include a conductive agent. As an example, the conductive agent may include at least one of superconducting carbon, acetylene black, carbon black, Ketjen black, carbon dots, carbon nanotubes, graphene, and carbon nanofibers.

In some embodiments, the positive electrode plate can be prepared by the following method: dispersing the components for preparing the positive electrode plate, such as the positive electrode active material, conductive agent, binder, and any other components, in a solvent (for example, N-methylpyrrolidone) to form a positive electrode slurry; applying the positive electrode slurry to the positive electrode current collector, and obtaining the positive electrode plate after drying, cold pressing, and other processes.

### [Separator]

In some embodiments, the secondary battery further includes a separator. This application does not impose particular restrictions on the type of separator, and any well-known porous structure separator with good chemical and mechanical stability can be used.

In some embodiments, the material of the separator may be selected from at least one of glass fiber, non-woven fabric, polyethylene, polypropylene, and polyvinylidene fluoride. The separator may be a single-layer film or a multilayer composite film, without particular restrictions. When the separator is a multilayer composite film, the materials of various layers may be the same or different, without particular restrictions.

In some embodiments, the positive electrode plate, negative electrode plate, and separator can be made into an electrode assembly through a winding process or a lamination process.

In some embodiments, the secondary battery may include an outer packaging. The outer packaging can be used to encapsulate the above electrode assembly and electrolyte.

In some embodiments, the outer packaging of the secondary battery may be a hard shell, such as a hard plastic shell, aluminum shell, or steel shell. The outer packaging of the secondary battery may also be a soft package, such as a pouch-type soft package. The material of the soft package may be plastic, such as polypropylene, polybutylene terephthalate, and polybutylene succinate.

In this application, the shape of the sodium secondary battery includes, but is not limited to, cylindrical, prismatic, or any other shape. For example, FIG. 2 is a sodium secondary battery 5 with a prismatic structure as an example.

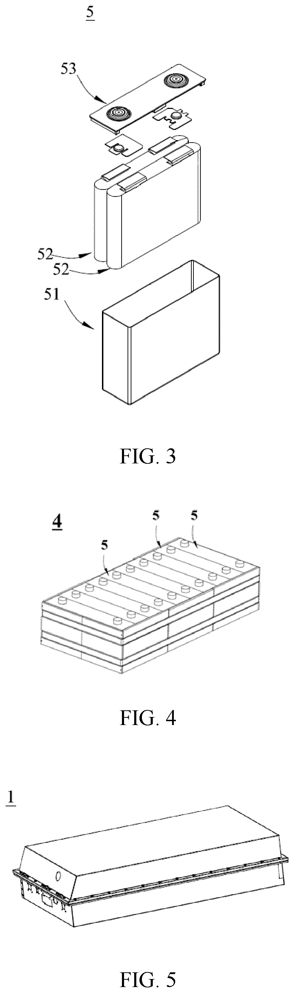

In some embodiments, referring to FIG. 3, the outer packaging may include a housing 51 and a cover plate 53. The housing 51 may include a bottom plate and side plates connected to the bottom plate, with the bottom plate and side plates enclosing a receiving cavity. The housing 51 has an opening communicating with the receiving cavity, and the cover plate 53 can cover the opening to seal the receiving cavity. The positive electrode plate, negative electrode plate, and separator can be formed into an electrode assembly 52 through a winding process or a lamination process. The electrode assembly 52 is encapsulated in the receiving cavity. The electrolyte is infiltrated into the electrode assembly 52. The number of electrode assemblies 52 contained in the sodium secondary battery 5 may be one or more, and those skilled in the art can choose according to specific actual needs.

In some embodiments, the sodium secondary battery can be assembled into a battery module, and the number of sodium secondary batteries contained in the battery module can be one or more, with the specific number chosen by those skilled in the art according to the application and capacity of the battery module.

FIG. 4 shows a battery module 4 as an example. Referring to FIG. 4, in the battery module 4, multiple sodium secondary batteries 5 can be sequentially arranged along the length direction of the battery module 4. Certainly, they can also be arranged in any other manner. Further, the multiple sodium secondary batteries 5 can be fixed by fasteners.

In some embodiments, the battery module 4 may further include a shell with a receiving space, in which the multiple sodium secondary batteries 5 are accommodated.

In some embodiments, the above battery module can also be assembled into a battery pack, and the number of battery modules contained in the battery pack can be one or more, with the specific number chosen by those skilled in the art according to the application and capacity of the battery pack.

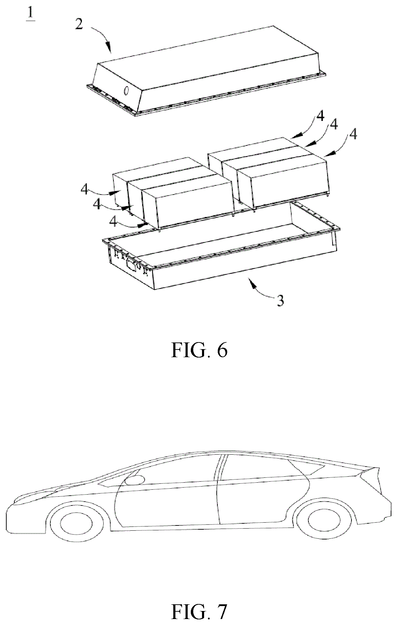

FIG. 5 and FIG. 6 show a battery pack 1 as an example. Referring to FIG. 5 and FIG. 6, the battery pack 1 may include a battery box and multiple battery modules 4 disposed in the battery box. The battery box includes an upper box body 2 and a lower box body 3, with the upper box body 2 capable of covering the lower box body 3 to form a closed space for accommodating the battery modules 4. The multiple battery modules 4 can be arranged in the battery box in any manner.

Additionally, this application also provides an electric apparatus, the electric apparatus including at least one of the sodium secondary battery, battery module, or battery pack provided by this application. The sodium secondary battery, battery module, or battery pack can be used as a power source or the electric apparatus or an energy storage unit for the electric apparatus. The electric apparatus may include mobile devices (for example, mobile phones or laptops), electric vehicles (for example, pure electric vehicles, hybrid electric vehicles, plug-in hybrid electric vehicles, electric bicycles, electric scooters, electric golf carts, or electric trucks), electric trains, ships, satellites, energy storage systems, or the like, but is not limited to these.

As an electric apparatus, the sodium secondary battery, battery module, or battery pack can be selected according to its usage needs.

FIG. 7 shows an electric apparatus as an example. The electric apparatus is a pure electric vehicle, hybrid electric vehicle, or plug-in hybrid electric vehicle, etc. To meet the high power and high energy density requirements of the electric apparatus for sodium secondary batteries, a battery pack or battery module can be used.

As another example, the apparatus may be a mobile phone, tablet, laptop, or the like. Such apparatus typically requires thin and light designs, and a sodium secondary battery can be used as the power source.

### Examples

Hereinafter, examples of this application are described. The examples described below are exemplary and are only used to explain this application, and should not be construed as limiting this application. Specific techniques or conditions are not specified in the examples, they are performed according to the techniques or conditions described in the literature in the field or according to the product specifications. Reagents or instruments used without specifying the manufacturer are conventional products that can be obtained commercially.

### I. Preparation method

### Example 1:

### (1) Preparation of positive electrode plate

90wt% of polyvinylidene fluoride binder was fully dissolved in N-methylpyrrolidone, and 5wt% of carbon black conductive agent and 5wt% of positive electrode active material sodium iron pyrophosphate were added to form a uniformly dispersed positive electrode slurry. The positive electrode slurry was uniformly applied to the surface of aluminum foil, then transferred to a vacuum drying oven for complete drying, and the obtained electrode plate was rolled and punched to obtain a positive electrode plate. An areal capacity of the positive electrode plate was 2mAh/cm², and a discharge capacity of the positive electrode active material in a range from 4.2V to 2V accounted for 95% of the discharge capacity in a range from 4.2V to 1.5V.

### (2) Preparation of negative electrode plate

A slurry containing dispersed conductive carbon nanotubes (CNTs) was applied to the surface of a copper foil, then transferred to a vacuum drying oven for complete drying, and punched to obtain a negative electrode plate. After full charging, an average potential of the negative electrode plate was tested to be 0.005V, with a difference between an upper limit potential and a lower limit potential of 0.1V.

### (3) Preparation of electrolyte

Ethylene glycol dimethyl ether (DME) and diethylene glycol diethyl ether (DEE) were mixed in a volume ratio of 1:1 to obtain a mixed solvent. In a glove box with an argon atmosphere (H₂O content being less than 10ppm, and O₂ content being less than 1ppm), sodium salt sodium hexafluorophosphate NaPF₆ was dissolved in the mixed solvent and stirred well, to obtain an electrolyte with a sodium salt concentration of 1mol/L.

### (4) Separator

A polypropylene film was used as the separator.

### (5) Battery Preparation

The positive electrode plate, separator, and negative electrode plate were stacked in order, with the separator placed between the positive and negative electrode plates to isolate the positive and negative electrode plates, and wound to obtain a jelly roll structure. Tabs were welded, the jelly roll structure was placed in an outer packaging, the prepared electrolyte was injected into the dried cell, and after processes such as sealing, standing, formation, shaping, and capacity testing, the sodium secondary battery product of Example 1 was obtained.

The preparation methods for the sodium secondary batteries of Examples 2 and 3 were substantially the same as that of Example 1, with the difference being the adjustment of the type of positive electrode active material, with specific parameters shown in Table 1.

### Example 4

The preparation method of Example 4 was substantially the same as that of Example 1, with the difference being that the negative electrode in Example 4 was a sodium metal strip, and the preparation process for the negative electrode plate was:

A sodium metal block was rolled into a thin sheet in a glove box, cut to the required size for the negative electrode, tightly attached to the negative electrode current collector, and closely bonded through battery encapsulation and force. The average potential of the negative electrode plate was 0V, with a difference between an upper limit potential and a lower limit potential of 0V.

### Example 5

The preparation method of Example 5 was substantially the same as that of Example 1, with the difference being that the positive electrode active material was replaced with a sodium-containing transition metal oxide.

The preparation methods for the sodium secondary batteries of Examples 6 to 8 were substantially the same as that of Example 1, with the difference being the adjustment of the capacity per unit area of the positive electrode plate, with specific parameters shown in Table 1.

The preparation method for the sodium secondary battery of Example 9 was substantially the same as that of Example 1, with the difference being the adjustment of the electrolyte components, with specific parameters shown in Table 1, and the preparation process was as follows:

In a glove box with an argon atmosphere (H₂O content being less than 10ppm, and O₂ content being less than 1ppm), sodium salt sodium hexafluorophosphate NaPF₆ was dissolved in the organic solvent ethylene glycol dimethyl ether (DME), and stirred well, to obtain an electrolyte with a sodium salt concentration of 1mol/L.

### Comparative Example 1

The preparation method of Comparative Example 1 was substantially the same as that of Example 1, with the difference being that the negative electrode of the sodium secondary battery in Comparative Example 1 was hard carbon, and the preparation process for the negative electrode plate was:

Negative electrode active material hard carbon, conductive agent Super-P, and binder sodium carboxymethyl cellulose CMC-Na were thoroughly mixed in a deionized water solvent system at a mass ratio of 90:5:5 to obtain a negative electrode slurry; the negative electrode slurry was uniformly applied to the negative electrode current collector copper foil; the copper foil was air-dried at room temperature and then transferred to a 120°C oven for drying for 1 h, followed by cold pressing and cutting to obtain a negative electrode plate. The hard carbon was purchased from Kuraray, with an average potential of the negative electrode plate of 0.28V and a difference between an upper limit potential and a lower limit potential of 1V.

**Table 1**

| No. | Positive electrode active material | Capacity per unit area of positive electrode plate (mAh/cm²) | Negative electrode active material | Electrolyte solvent |
|---|---|---|---|---|
| Example 1 | Sodium iron pyrophosphate | 2 | / | DME+DEE |
| Example 2 | Sodium vanadium phosphate | 2 | / | DME+DEE |
| Example 3 | Fluorinated sodium vanadium phosphate | 2 | / | DME+DEE |
| Example 4 | Sodium iron pyrophosphate | 2 | Sodium metal strip | DME+DEE |
| Example 5 | NaMn_{0.2}Fe_{0.2}Co_{0.2}Ni_{0.2}Ti_{0.2}O₂ | 2 | / | DME+DEE |
| Example 6 | Sodium iron pyrophosphate | 0.25 | / | DME+DEE |
| Example 7 | Sodium iron pyrophosphate | 20 | / | DME+DEE |
| Example 8 | Sodium iron pyrophosphate | 30 | / | DME+DEE |
| Example 9 | Sodium iron pyrophosphate | 2 | / | DME |
| Comparative Example 1 | Sodium iron pyrophosphate | 2 | Hard carbon | DME+DEE |

### II. Battery performance test

### 1. Cycling capacity retention rate

At 25°C and normal pressure (0.1MPa), the battery was charged at a constant current of 0.5C to a voltage of 3.5V, and then discharged at a constant current of 1C to a voltage of 3.2V, which constituted one charge-discharge cycle. Taking the capacity of the first discharge as 100%, the charge-discharge cycle was repeated 200 times, and the test was stopped. The ratio of the discharge capacity at the 200th cycle to the first discharge capacity was taken as the cycling capacity retention rate.

### 2. Compatibility with lithium battery motor

The starting voltage of existing motors was 200V, with 100 cells. If the motor could not start, it indicated incompatibility, denoted by N; if the motor could start, it indicated compatibility, denoted by Y.

### III. Analysis of test results for examples and comparative example

Batteries of each example and comparative example were prepared according to the above methods, and various performance parameters were measured, with results shown in Tables 2 and 3.

**Table 2**

| No. | Positive electrode plate | Negative electrode plate | | | Battery | | |
|---|---|---|---|---|---|---|---|
| | Discharge capacity ratio in range from 4.2V to 2.0V | Average potential | Difference between upper limit potential and lower limit potential | Discharge CB | Discharge capacity ratio in range from 2.0V to 4.0V | Discharge capacity ratio in voltage range from 2V to 1.5V | Compatibility with existing motor |
| Example 1 | 95.00% | 0.005V | 0.1V | 0.90 | 97.5% | 2.50% | Y |
| Example 2 | 97.80% | 0.005V | 0.1V | 0.92 | 98.1% | 1.90% | Y |
| Example 3 | 98.50% | 0.005V | 0.1V | 0.91 | 98.0% | 2.00% | Y |
| Example 4 | 95.00% | 0.000V | 0 | 3.0 | 95.0% | 5.00% | Y |
| Example 5 | 98.00% | 0.005V | 0.1V | 0.89 | 98.4% | 1.60% | Y |
| Comparative Example 1 | 95.00% | 0.280V | 1V | 0.85 | 93.0% | 7.00% | N |

**Table 3**

| No. | Positive electrode plate | Negative electrode plate | | | | Battery | | | |
|---|---|---|---|---|---|---|---|---|---|
| | Discharge capacity ratio in range from 4.2V to 2.0V | Average potential | Difference between upper limit potential and lower limit potential | Thickness in fully charged state after 200 cycles | Discharge CB | Discharge capacity ratio in range from 2.0V to 4.0V | Discharge capacity in voltage range from 2.0V to 1.5V | Capacity retention rate after 200 cycles | Compatibility with existing motor |
| Example 1 | 95.00% | 0.005V | 0.1V | 36 | 0.90 | 97.5% | 2.50% | 98.0% | Y |
| Example 4 | 95.00% | 0.000V | 0 | / | 3.0 | 95.0% | 5.00% | 95.0% | Y |
| Example 6 | 95.00% | 0.005V | 0.1V | 10 | 0.90 | 97.5% | 2.50% | 98.0% | Y |
| Example 7 | 95.00% | 0.005V | 0.1V | 203 | 0.90 | 97.5% | 2.50% | 90.0% | Y |
| Example 8 | 95.00% | 0.005V | 0.1V | 266 | 0.85 | 99.5% | 0.50% | 83.0% | Y |
| Example 9 | 95.00% | 0.005V | 0.1V | 25 | 0.88 | 98.0% | 2.00% | 92.0% | Y |

From Tables 2 and 3, it can be seen that according to the sodium secondary battery provided in the examples of this application, a ratio of a discharge capacity in at least one 2V discharge range during a discharge process to a total discharge capacity of the sodium secondary battery is greater than or equal to 95%, enabling them to be compatible with existing motors, facilitating the promotion and application of sodium secondary batteries.

From the comparison between Example 1 and Example 4, it can be seen that a secondary battery with a CB value of less than or equal to 1.5 can further improve the cycling capacity retention rate of the secondary battery.

From the comparison between Example 8 and Examples 1, 6 and 7, it can be seen that in the fully charged state of the sodium secondary battery, a thickness h of the film layer on the negative electrode current collector in the negative electrode plate being less than or equal to 250µm is beneficial to increasing the cycling capacity retention rate of the secondary battery; h being 10µm-200µm further optimizes the cycling capacity retention rate of the secondary battery.

From the comparison between Example 9 and Example 1, it can be seen that including both short-chain ethers and long-chain ethers in the electrolyte can further improve the cycling stability of the battery.

It should be noted that this application is not limited to the above embodiments. The above embodiments are merely examples, and embodiments having substantially the same technical concept and producing the same effects within the scope of the technical solutions of this application are included in the technical scope of this application. Additionally, without departing from the gist of this application, other embodiments constructed by combining constituent elements of the embodiments in various ways that can be conceived by a person skilled in the art, and embodiments implemented by applying various modifications thereto, also fall within the scope of the present application.

## Claims

1. A sodium secondary battery, wherein a ratio of a discharge capacity of the sodium secondary battery in at least one 2V discharge range during a discharge process to a total discharge capacity of the sodium secondary battery is greater than or equal to 95%, and test conditions for the discharge process of the sodium secondary battery are: charging at a constant rate of 0.33C to 4.2V at 25°C, followed by discharging at a constant rate of 0.33C to 1.5V.

2. The sodium secondary battery according to claim 1, wherein a ratio of a discharge capacity of the sodium secondary battery in a voltage range from 2V to 1.5V during a discharge process to a total discharge capacity of the sodium secondary battery is less than or equal to 5%, and test conditions for the discharge process of the sodium secondary battery are: charging at a constant rate of 0.33C to 4.2V at 25°C, followed by discharging at a constant rate of 0.33C to 1.5V.

3. The sodium secondary battery according to claim 1 or 2, wherein the sodium secondary battery comprises a positive electrode plate, and a ratio of a discharge capacity of the positive electrode plate in at least one 2.2V discharge range during a discharge process to a total discharge capacity of the positive electrode plate is greater than or equal to 90%; and a discharge process test for the positive electrode plate is a button cell test with conditions of: charging at a constant rate of 0.1C to 4.2V at 25°C, followed by discharging at a constant rate of 0.1C to 1.5V.

4. The sodium secondary battery according to claim 3, wherein the positive electrode plate comprises a positive electrode current collector and a positive electrode film layer disposed on at least one side of the positive electrode current collector, the positive electrode film layer comprising a positive electrode active material, wherein the positive electrode active material comprises polyanionic compounds, sodium-containing transition metal oxides, and respective modified compounds thereof.

5. The sodium secondary battery according to claim 4, wherein a composition of the polyanionic compound is as shown in Formula I:
NaₙMₚ(XₐO_{b})_{c}Z_{w} Formula I,
wherein M comprises one or more of Ti, V, Cr, Mn, Fe, Co, Ni, Ca, Mg, Al, Nb, or Zr, X comprises one or more of Si, S, P, As, B, Mo, W, or Ge, and Z comprises one or more of F, O, Cl, or OH, wherein 2≤n≤7, 1≤p≤4, 1≤a≤2, 1≤b≤7, 1≤c≤5, and 0≤w≤3.

6. The sodium secondary battery according to claim 4 or 5, wherein the positive electrode active material comprises one or more of sodium iron pyrophosphate, sodium vanadium phosphate, fluorinated sodium vanadium phosphate, sodium iron sulfate, and respective modified materials thereof.

7. The sodium secondary battery according to any one of claims 1 to 6, wherein a capacity per unit area M of the positive electrode plate is less than or equal to 20mAh/cm².

8. The sodium secondary battery according to any one of claims 1 to 7, wherein the sodium secondary battery comprises a negative electrode plate, and in a fully charged state of the sodium secondary battery, an average potential of the negative electrode plate is less than or equal to 0.2V, the fully charged state of the sodium secondary battery referring to the sodium secondary battery being charged at a constant rate of 0.33C to 4.2V at 25°C; and/or
a difference between an upper limit potential and a lower limit potential of the negative electrode plate is less than or equal to 0.5V.

9. The sodium secondary battery according to claim 7, wherein in a fully charged state of the sodium secondary battery, a thickness h of a film layer on the negative electrode current collector in the negative electrode plate is less than or equal to 250µm, optionally 10µm-200µm; and
the fully charged state of the sodium secondary battery refers to the sodium secondary battery being charged at a constant rate of 0.33C to 4.2V at 25°C.

10. The sodium secondary battery according to any one of claims 1 to 9, wherein the sodium secondary battery comprises an electrolyte, the electrolyte comprising short-chain ethers and long-chain ethers; and the short-chain ether comprises ethylene glycol dimethyl ether, and the long-chain ether comprises at least one component as shown in Formula II:
R1-(O-R3)n-O-R2 Formula II,
wherein R1 and R2 are each independently selected from linear or branched alkyl groups with 1 to 6 carbon atoms, R3 is selected from linear or branched alkylene groups with 1 to 5 carbon atoms, and n is an integer from 2 to 5; or
R1 and R2 are each independently selected from linear or branched alkyl groups with 2 to 6 carbon atoms, R3 is selected from linear or branched alkylene groups with 1 to 5 carbon atoms, and n is 1.

11. The sodium secondary battery according to claim 10, wherein the long-chain ether comprises one or a combination of two or more of the following: diethylene glycol dimethyl ether, triethylene glycol dimethyl ether, tetraethylene glycol dimethyl ether, pentaethylene glycol dimethyl ether, ethylene glycol diethyl ether, diethylene glycol diethyl ether, triethylene glycol diethyl ether, tetraethylene glycol diethyl ether, pentaethylene glycol diethyl ether, ethylene glycol dibutyl ether, and polymers thereof.

12. The sodium secondary battery according to claim 10 or 11, wherein based on a total mass of the electrolyte, a mass percentage of the short-chain ether is 4% to 50%.

13. The sodium secondary battery according to any one of claims 1 to 12, wherein the sodium secondary battery comprises an anode-free battery or a sodium metal battery.

14. An electric apparatus, comprising the sodium secondary battery according to any one of claims 1 to 13.
